# EUROPEAN PATENT APPLICATION

(11) **EP 4 808 129 A1**
(43) Date of publication of application: **16.09.2026**
(21) Application number: 25305330.0
(22) Date of filing: 13.03.2025
(51) Int. Cl.: H04N 21/234, G06T 13/00, G06T 17/00, H04N 21/81, H04N 21/854

(54) **GAZE SIGNALING IN AVATAR REPRESENTATION FORMAT**

(71) Applicant: InterDigital CE Patent Holdings, SAS, 75017 Paris (FR)
(72) Inventor: GOSSELIN, Philippe Henri, 35340 LIFFRE (FR); LE CLERC, Francois, 35590 L'HERMITAGE (FR); AVRIL, Quentin, 35830 BETTON (FR); COVA REGATEIRO, João Pedro, 35220 CHATEAUBOURG (FR)
(74) Representative: Vossius & Partner Patentanwälte Rechtsanwälte mbB

(57) **Abstract**

Gaze signaling in an avatar representation format. A method including: receiving, with a decoder, an eye animation stream format and animation data, determining, with the decoder, whether the eye animation stream format is supported by the decoder, responsive to determining that the eye animation stream format is supported by the decoder, determining, with the decoder, whether the animation data includes an eye set that is supported by the eye animation stream format, responsive to determining that the animation data includes the eye set that is supported by the eye animation stream format, determining, with the decoder, whether the animation data includes gaze properties associated with the eye set, and ,responsive to determining that the animation data includes the gaze properties associated with the eye set, initiating, with the decoder, an animation of an avatar with the animation data and the gaze properties.

## Description

### BACKGROUND

The present application is related to encoding and decoding avatar three-dimensional (3D) representations. More specifically, the present application is related to encoding and decoding gaze control in the Moving Picture Experts Group (MPEG) avatar representation format (ARF).

### BRIEF SUMMARY

Briefly stated, in one embodiment, a method including: receiving, with a decoder, an eye animation stream format and animation data, determining, with the decoder, whether the eye animation stream format is supported by the decoder, responsive to determining that the eye animation stream format is supported by the decoder, determining, with the decoder, whether the animation data includes an eye set that is supported by the eye animation stream format, responsive to determining that the animation data includes the eye set that is supported by the eye animation stream format, determining, with the decoder, whether the animation data includes gaze properties associated with the eye set, and ,responsive to determining that the animation data includes the gaze properties associated with the eye set, initiating, with the decoder, an animation of an avatar with the animation data and the gaze properties.

Briefly stated, in another embodiment, a method including: encoding, with an encoder, a bitstream with an eye animation stream format and animation data; wherein the animation data includes an eye set of an avatar that is supported by the eye animation stream format, and wherein the animation data includes gaze properties of the avatar associated with the eye set.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example of video decoder according to one or more embodiments of the present disclosure;
FIG. 4 is example chart of a MPEG ARF or ARF based document/file according to one or more embodiments of the present disclosure;
FIG. 5 is a method for decoding an eye animation stream format and animation data according to one or more embodiments of the present disclosure;
FIG. 6 is a flowchart illustrating an example method for encoding a MPEG ARF or ARF based document/file according to one or more embodiments of the present disclosure;
FIG. 7 illustrates an example method for encoding a MPEG ARF or ARF based document/file according to one or more embodiments of the present disclosure;
FIG. 8 illustrates a method of parsing of a first property of the ARF file of FIG. 4, according to one or more embodiments of the present disclosure;
FIG. 9 is a method of parsing a second property of the ARF file of FIG. 4 according to one or more embodiments of the present disclosure;
FIG. 10 illustrates a method of parsing of a third property of the ARF file of FIG. 4, according to one or more embodiments of the present disclosure;
FIG. 11 illustrates a method of parsing of a fourth property of the ARF file of FIG. 4, according to one or more embodiments of the present disclosure;
FIG. 12 illustrates a method of parsing of a fifth property of the ARF file of FIG. 4, according to one or more embodiments of the present disclosure;
FIG. 13 illustrates a method of parsing of a sixth property of the ARF file of FIG. 4, according to one or more embodiments of the present disclosure;
FIGS. 14A and 14B illustrate a method of parsing of a seventh property of the ARF file of FIG. 4, according to one or more embodiments of the present disclosure; and
FIGS. 15A-15H are diagrams illustrating an example code of the ARF file of FIG. 4 according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

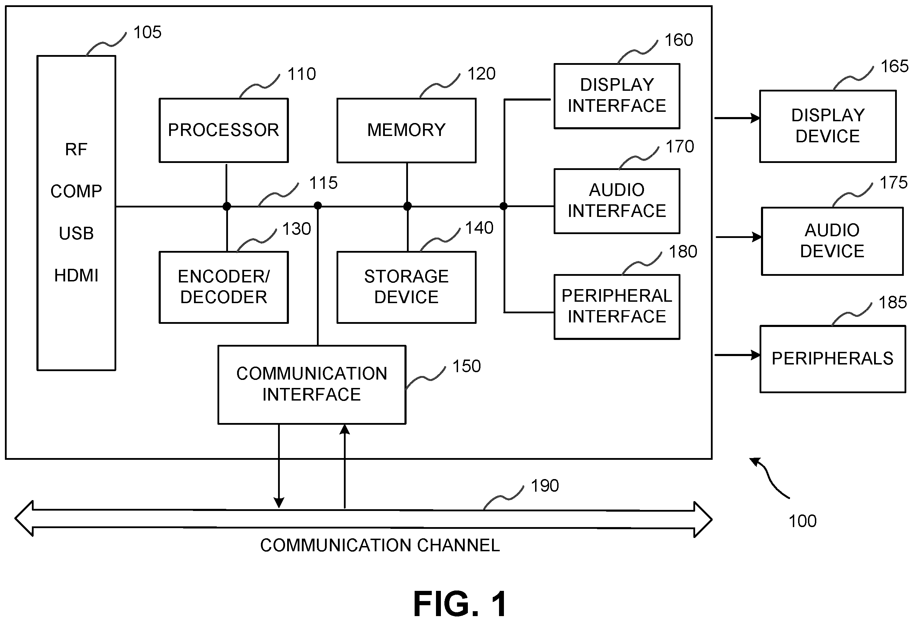

Referring to the drawings, there is shown in FIG. 1 a block diagram illustrating an example system 100 in which embodiments of the present disclosure may be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, individually or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 may be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

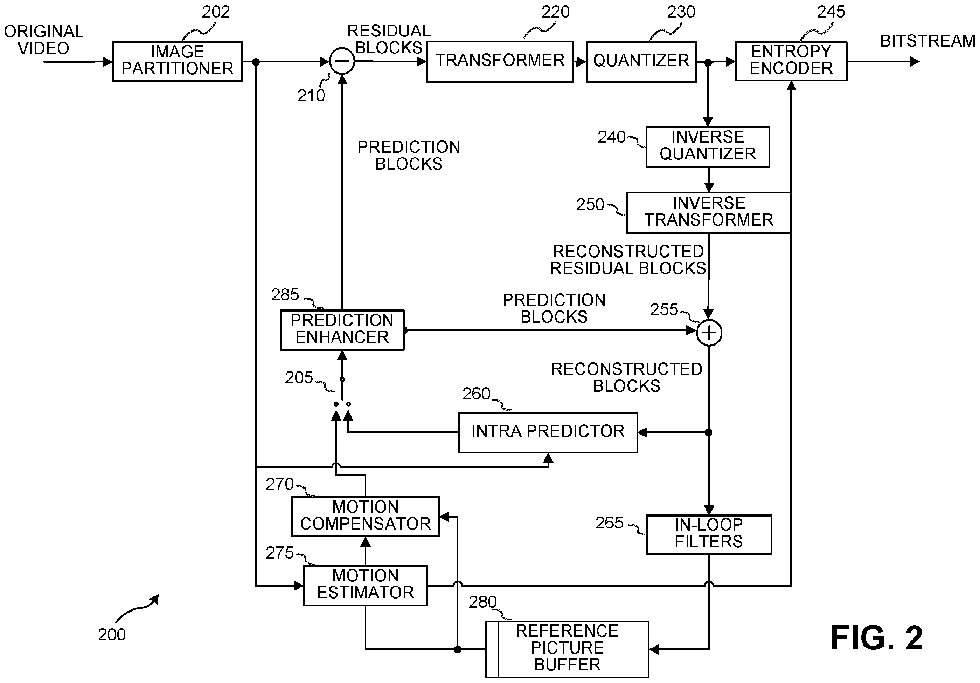

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and may be applied to other standards and recommendations, as well as extensions thereof.

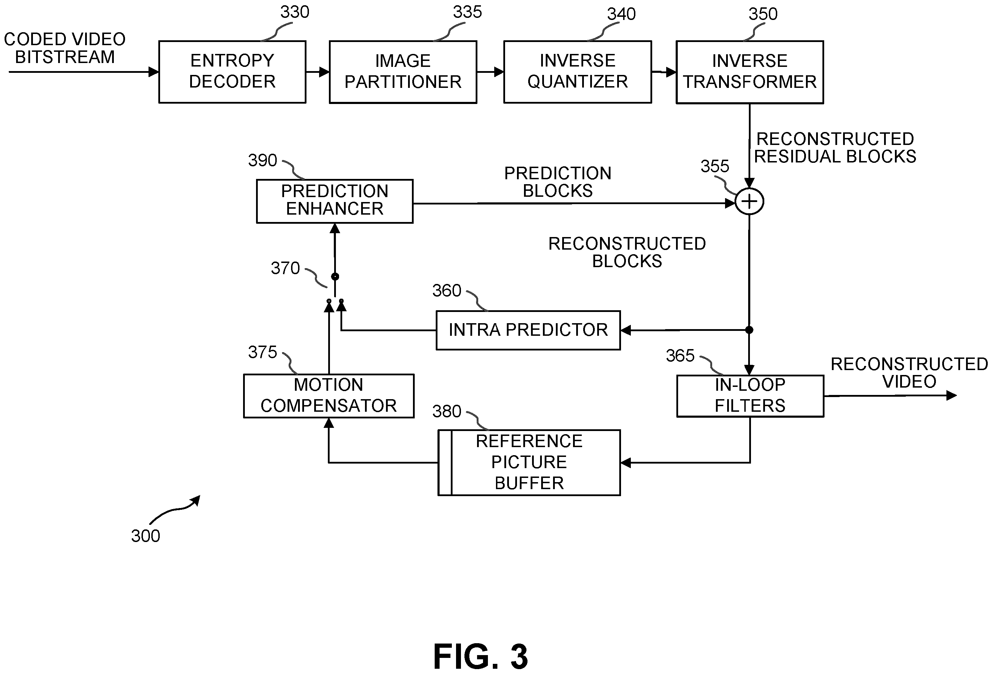

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction may be applied), or a partition thereof, each of which may include samples of a luma component, *Y*, and chroma components, *U* and V (also denoted herein by *C*).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that may be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 may be applied to the reconstructed samples of an image to reduce distortions introduced by the encoding process. For example, a deblocking filter (DBF), bilateral filter (BIF), sample adaptive offset (SAO), and/or adaptive loop filter (ALF) may be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block may be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) may be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) may process the reconstructed video data. For example, post-decoding processing may include an inverse color model transform (e.g., conversion from YUV 4:2:0 to RGB 4:4:4) or an inverse mapping to reverse the mapping process performed by the pre-encoding processor described with respect to FIG. 2. The post-decoding processor may use metadata derived by the pre-encoding processor and/or signaled in the video bitstream.

The domain of the present application relates to a traditional "look at" gaze descriptor for use within virtual reality modeling (VRM). Such descriptors allow rotation of each eye of a face of a dynamic graphical avatar independently. However, traditionally such descriptors are limited to human eyes (two eyes, a left and right one). Furthermore, the "look at" gaze descriptor traditionally does not use animations to rotate eyes. Rather, a "look at" point is used and an application computes angles to rotate eyes and weights to apply on a node, a morph target, material color or texture transform. It is not possible to run/apply changes on the avatar other than ones based on a node, a morph target, material color, or texture transform. As a result, the descriptor provides less freedom than animations, which may be any combination of transforms, with or without non-linearities.

Lastly, traditionally only one "gaze style" may be used and it is not possible to signal how the "look at" gaze properties should be used. For instance, when an application is given a "look at" point, nothing is signaled on how the application should go from the current gaze to a new gaze. As an example, in instances where an avatar is currently looking at a first point ("point A"), and the application changes the avatar such that the avatar looks at some other point ("point B"). A default gaze style is to instantaneously switch to a gaze looking at point B. Other gaze styles could define a non-instantaneous gaze change. In these cases, the application may compute intermediate steps (like interpolated angles) between looking at point A and looking at point B. Then, the user may see the avatar moving the eyes from point A to point B at some speed and some dynamic (linear, first order, second order, etc.).

Using the MPEG-I Scene Description (SD) format and the "MPEG_node_avatar" extension, an avatar may be encoded in a Graphics Library Transmission Format ("glTF") file. Then, using the "gaze" property, the gaze of an avatar may be defined in a glTF file. Such encodings are based on animations and a gaze style that can be signaled. However, such signaling may not be directly used for MPEG ARF because the gaze depends on a generic hierarchical representation of data. The representations for gaze signaling are based on generic nodes which may be of various kinds, like a geometry or a joint. However, MPEG ARF does not contain such generic representation and spread data into different containers (one for geometries, one for blendshapes, one for joints, etc.). As a result, the encoding of gaze controls must accurately locate which component is modified by each channel, rather than referencing a generic node.

A specificity of MPEG ARF is the signaling of expected streaming animation formats. Such a signal informs the decoder that the avatar may be animated following a specific list of animation controls. Considering the gaze, the OpenXR extension "XR_FB_eye_tracking_social" may be used to receive the gaze parameters of a user.

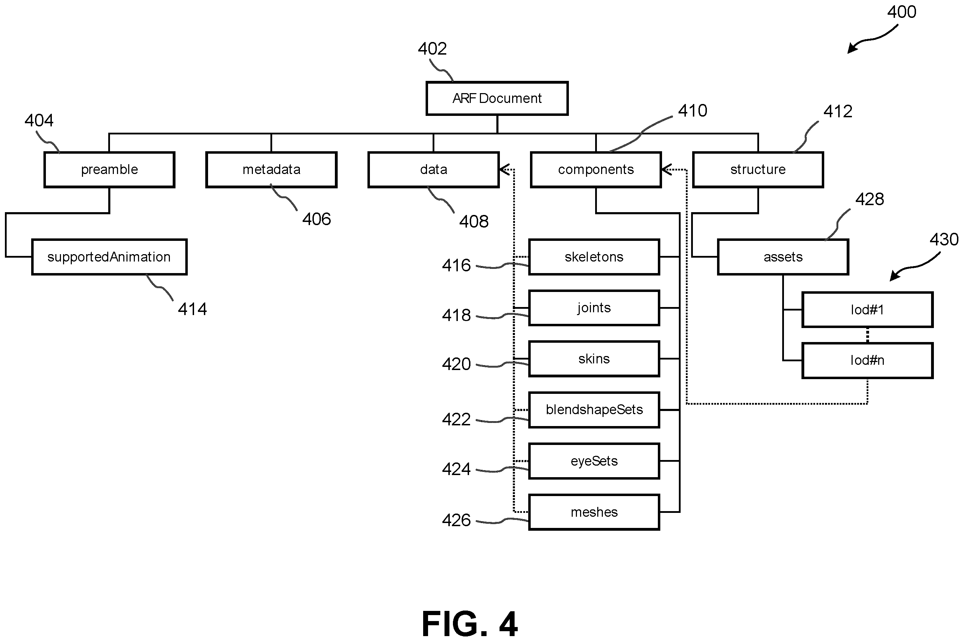

FIG. 4 is a chart illustrating an example 400 of containers (represented as categories) of a MPEG ARF or ARF-based document/file 402 (referred to herein as ARF file 402), in accordance with some embodiments of the present disclosure. The MPEG ARF includes a preamble 404, metadata 406, data 408, components 410, and structure 412 property. The preamble 404 is used to uniquely identify the format and characteristics of the file 402.

The preamble 404 contains "supportedAnimation" properties 414 which includes a list of the streaming animation formats that is supported by the file 402. Table 1 below includes a list of properties included within the supportedAnimation container 414 according to some aspects.

**Table 1 - supportedAnimation properties**

| Name | Type | Use | Description |
|---|---|---|---|
| name | string | M | The name of the LOD. |
| faceAnimations | array (uri) | M | Lists the supported face animation types. |
| | | | Each item in the array is a string representing a supported face animation type. |
| | | | Each identifier should be formatted as a URN that includes an identifier of the framework, followed by an identifier of the facial blendshape set. |
| bodyAnimations | array (uri) | M | Lists the supported body animation types. |
| | | | Each item in the array is a string representing a supported body animation type. |
| | | | Each identifier should be formatted as a URN that includes an identifier of the body animation/tracking framework, followed by an identifier of the body joint set. |
| handAnimations | array (uri) | M | Lists the supported hand animation types. |
| | | | Each item in the array is a string representing a supported hand animation type. |
| | | | Each identifier should be formatted as a URN that includes an identifier of the hand animation/tracking framework, followed by an identifier of the hand joint set. |
| landmarkAnimations | array (uri) | O | Lists the supported landmark animation types. Each item in the array is a string representing a supported landmark animation type. |
| | | | Each identifier should be formatted as a URN that includes an identifier of the landmark animation/tracking framework, followed by an identifier of the landmark set. |
| proprietary Animations | array( Proprietar yAnimati on) | O | A list of proprietary animation descriptions, which may be used to animate assets in the ARF container. |
| eyeAnimations | array (uri) | M | Lists the supported eye animation types. Each item in the array is a string representing a supported eye animation type. |

The "eyeAnimations" property, introduced in Table 1 above, lists the eye animation formats supported by the avatar in the ARF file 402.

The metadata 406 contains main information such as age or gender of the avatar. The metadata 406 contains low-level data such as arrays of value, tensors or references to external files. Items of these containers are referenced by components 410.

The components 410 include several containers, each dedicated to a type of component (for example, skeletons 416, joints 418, skins 420, blendshapeSets 422, eyeSets 424, and meshes 426). Below, Table 2 includes a list detailing the properties included within the components 410 property according to some aspects.

**Table 2 - Components properties**

| Name | Type | Use | Description |
|---|---|---|---|
| Skeletons | array(Skeleton) | O | A list of skeletons used to describe the avatar skeletal asset. |
| Skins | array(Skin) | O | A list of assets that are stored in this ARF container. |
| Meshes | array(Mesh) | M | A list of geometries used to describe the avatar asset. |
| Nodes | array(Node) | O | A list of nodes used to organize, merge and describe and transform the avatar components. |
| blendshapeSets | array(BlendshapeSet) | O | A list of blend shape sets used to describe the blend shape-based animations. |
| landmarkSets | array(LandmarkSet) | O | A list of landmark sets used to describe landmark-based animation. |
| eyeSets | array(EyeSet) | O | A list of eye sets used to describe eyes and gaze animation. |

The "eyeSets" properties 424 is introduced in Table 2 above. The eyeSets properties 424 is to signal the properties of eyes of the avatar and allow the definition of eye sets of the avatar. The eyeSets properties 424 contain a list of EyeSet, described in more detail below, and includes all properties of eyes of the avatar.

The structure 412 contains assets 428 which defines the components for an avatar part (body, hand, head, ...) for a respective level of detail (LOD) 430 (collectively referred to herein as LOD objects 430). Table 3 below includes a list of properties included within an LOD object 430 according to some aspects.

**Table 3 - LOD properties**

| Name | Type | Use | Description |
|---|---|---|---|
| name | string | M | The name of the LOD. |
| skins | array(number) | O | List of references to all skins that are part of this asset. |
| meshes | array(number) | M | List of non-skinned meshes that are part of this asset. |
| skeletons | array(number) | O | List of references to skeletons in the ARF container. |
| blendshapeSets | array(number) | O | List of references to blendshape sets in the ARF container. |
| eyeSets | array(number) | O | List of references to eye sets in the ARF container. |

The eyeSets properties 424, as described above, are introduced herein and allows the referencing of all eye sets used by the LOD 430. In some embodiments, the eyeSets properties 424 do not reference eye sets in the components 410 root property, but directly contains the properties of eye sets, (e.g., the type of eyeSets 424 in LOD 430 is "array(EyeSet)"). In such embodiments, there is no eyeSets properties 424 in the components 410.

Table 4 below includes the EyeSet property type for the eyeSets property 424 in accordance with some aspects.

**Table 4 - EyeSet properties**

| Name | Type | Use | Description |
|---|---|---|---|
| name | string | M | The name of the eye set. |
| id | integer | M | A unique identifier of the eye set. |
| animationInfo | array(AnimationLink) | M | Establishes a link to the supported animation and tracking frameworks that this eye set may be used with. |
| description | string | O | The description of the eye set. |
| purpose | string | O | The purpose of the eye set. |
| eyes | array(Eye) | M | The list of eyes. |
| gaze | Gaze | O | Eye gaze definition. |

The EyeSets property type does not exist in current format and is introduced by this disclosure. Such items are stored in the eyeSets property 424 of the components 410 root property and, in some aspects (as described above) are referenced by the eyeSets property of a LOD 430.

With reference to Table 4 above, the name property defines the name of the avatar eye set. The id property defines a unique integer for identifying the avatar eye set. The animationInfo property defines the animation streaming formats the eye set may be used with. The AnimationLink property type is defined in section 7.5.6 of the MPEG-I ARF: ISO/IEC 23090-39:2025 "Information technology - Coded representation of immersive media - Part 39: Avatar Representation Format." The description property describes the avatar eye set and its usage. The description property, however, is only illustrative. For example, the description property may be used in a user interface to help the user understand what the eye set was intended for. The purpose property contains a string that identifies the purpose of the avatar eye set. The purpose property follows predetermined values, defined by an application or a standard. In some embodiments, the type of this property is an enum. The eyes property contains the geometric properties of each eye of the avatar in an Eye property type and the gaze property defines a gaze of the avatar in a Gaze property type. Both the Eye and Gaze property types are described in more detail below.

Table 5 below includes the properties of Eye type of Table 4 in accordance with some aspects.

**Table 5 - Eye properties**

| Name | Type | Use | Description |
|---|---|---|---|
| name | string | M | The name of the eye. |
| id | integer | M | A unique identifier of the eye. |
| description | string | O | The description of the eye. |
| purpose | string | O | The purpose of the eye. |
| node | number | O | The joint of the eye. |
| skin | number | O | A skin that can be used to animate the eye. |
| mesh | number | O | References a Mesh item |
| indices | number | O | References a Data item with a list of vertex indices |

The Eye property type does not exist in the traditional ARF format. The Eye property type defines the geometric properties of an eye and may be used to control the avatar gaze when the gaze property in the eye set (cf Table 4) is not defined. Depending on certain cases, some features may not be complete (for example, no gaze style) and in some cases, the ARF file may not have enough information to control the avatar gaze (for example, non-round eyes may not be animable).

With reference to Table 5 above, the name property defines the name of the eye. The id property defines a unique integer for identifying the eye. The description property describes the eye and the usage of the eye. The description property is illustrative and, for example, may be used in a user interface to help the user understand what was intended for the eye. The purpose property contains a string that identifies the purpose of the eye. The purpose property should follow predetermined values, defined by an application or a standard. In some embodiments, the type of this property is an enum.

The node property defines the joint for the eye. Such instances are possible when the eye is animable using a single joint and with rotations. The skin property references a skinning that may be used to animate the eye. Such instances are possible when the eye is animable using a single joint and with rotations. The mesh property references a mesh that contains the eye. The mesh may contain more than the eye, in which case the indices property references a data item with the list of vertex indices of the eye.

Table 6 below includes the Gaze properties of Table 4 in accordance with some aspects.

**Table 6 - Gaze properties**

| Name | Type | Use | Description |
|---|---|---|---|
| type | string | M | The gaze type, which may be "angular" or "lookAt". |
| style | string | M | The gaze style, which defines how eyes move. |
| speed | number | M | Defines the speed at which the eyes move. |
| if (type == "angular") { | | | |
| horizontal | GazeAnimation | M | Gaze animation properties for the horizontal axis. |
| vertical | GazeAnimation | M | Gaze animation properties for the vertical axis. |
| roll | GazeAnimation | O | Gaze animation properties for the roll angle. |
| } else if (type == "lookAt") { | | | |
| eyes | array(GazeEye ) | M | List of properties for the gaze of each eye of the avatar. |
| } | | | |

The type property defines the type of the gaze. Possible values are "angular" and "lookAt", but other extensions may propose new types. The style property defines rules or hints about the usage of the gaze information. Values for style may be defined by an application or a standard. For example, when style is "instantaneous", then eyes are immediately rotated from the current look at point towards to the look at point, with no delay. Another value for style could be "linear", in which case eyes rotates linearly towards to the look at point, at a speed defined by the "speed" property. The speed property defines how fast the eye moves from their current state to a new state given by new angles or a new look at point. The interpretation of speed may depend on the style property. When type is "angular", then the avatar gaze is angular. In such instances, the horizontal, vertical and roll properties are used. When type is "lookAt", then the eyes properties list the gaze properties of each eye.

Table 7 below includes the GazeEye properties in accordance with some aspects.

**Table 7 - GazeEye properties**

| Name | Type | Use | Description |
|---|---|---|---|
| name | string | M | Name of the eye. |
| id | string | M | Eye identifier. |
| horizonta l | GazeAnimation | M | Gaze animation properties for the horizontal plane of the eye. |
| vertical | GazeAnimation | M | Gaze animation properties for the vertical plane of the eye. |
| roll | GazeAnimation | O | Gaze animation properties for the roll plane of the eye. |
| center | number [3] | M | Coordinates of the center of the eye. |
| forward | number [3] | M | Forward axis of the eye |
| up | number [3] | M | Bottom-up axis of the eye. |
| right | number [3] | O | Left to right axis of the eye. |

The name property describes the name of the eye. The id property uniquely identifies the eye. Values must be defined by an application or a standard. For example, a standard may define "human:left" as the identifier of a human left eye. In some embodiments, this property is an enum. The horizontal, vertical and roll properties are GazeAnimation properties that define how to rotate the eye along an axis using an animation (described in more detail below). The center property is a (x,y,z) vector that defines the center of the eye. The forward, up and right properties define the canonical orientation of the eye in world coordinates. When the right property is not defined, then the property is deduced from the two others knowing the basis is right-handed. An application uses these determined properties to compute an angle for each eye axis/plane. These angles may be used directly, or modified, depending on the gaze style. For example, when the gaze style is "linear", the computed angles in the previous step may be target angles, and the angles used to animate changes linearly from their current value to the target value. Angles may also be modified considering all eyes, also depending on the gaze style. For example, a gaze style may force the same angles for each axis and for each eye.

Table 10 below includes the GazeAnimation properties in accordance with some aspects.

**Table 10 - GazeAnimation properties**

| Name | Type | Use | Description |
|---|---|---|---|
| range | number[2] | M | Minimum and maximum angles of the rotation. |
| type | string | M | Type of gaze animation (GA_EXTERN, GA_CHANNELS, GA_BLENDSHAPE, GA_JOINT, GA_JOINT_ROTATION, GA_JOINT_SCALE, GA_JOINT_TRANSLATION, GA_CONTROLLER) |
| if (type == GA_EXTERN) { | | | |
| data | number | M | The identifier of a data item with external content with animation. |
| path | string | M | The identifier, index or path of an animation or controller in the external container. |
| shift | number | O | A shift to apply to the input values of the animation or controller in the external container. |
| } else if (type == GA_CHANNELS) { | | | |
| channels | array(Channel) | M | List of controller channels. |
| } else { | | | |
| input | integer | M | The identifier of a data component with the input values. |
| interpolation | enum | O | The interpolation method (INTERPOLATION_LINEAR, INTERPOLATION_STEP or INTERPOLATION_CUBICSPLINE). Default is INTERPOLATION_LINEAR. |
| output | integer | M | The identifier of a data component with the output values |
| if (type == GA_BLENDSHAPE) { | | | |
| blendshapeSet | number | M | The identifier of a blendshape set. |
| blendshapeShap e | number | M | The index of a shape in the blendshape set. |
| } else if (type == GA_JOINT or type == GA_JOINT_ROTATION or type == GA_JOINT_SCALE or type == GA_JOINT_TRANSLATION){ | | | |
| skin | integer | O | The identifier of a skin. |
| joint | integer | M | The identifier of a joint. |
| } else if (type == GA_CONTROLLER) { | | | |
| controllerSet | integer | M | The identifier of a controller set. |
| controller | integer | M | The identifier of a controller in the controller set |
| } | | | |
| } | | | |

The animation properties channels, input, interpolation, and output are similar to the ones of a glTF animation.

A GazeAnimation object defines how an eye may be animated along a given axis. An application may deduce from the values of this object an animation from a minimal angle (defined by the first value of the range property) and a maximum angle (defined by the second value of the range property). Thus, any animation is possible and the application does not have to wonder which part of the avatar are actually animated. The application will only run the animation given a gaze angle, and the avatar changes its gaze accordingly. For example, when a GazeAnimation object is dedicated to the horizontal axis, then the minimum angle will cause the avatar look to the right and the maximum angle to the left.

All the properties of GazeAnimation except range are dedicated to the definition of an animation, which, given an angle, returns the avatar mesh in a new state. The type property defines the type of animation being signaled. When type is GA_EXTERN, the animation is stored in an external container. The external container is in a Data item referenced by the data property. For instance, the referenced data item may be a graphics language Transmission Format Binary (GLB) file. The path property indicates which animation/control to use for this gaze animation. For example, when path is "animations/2," this indicates the third animation of a GLB file. The shift property allows the shifting of the input values of that animation. For example, in GLB files, animation cannot have negative input values and may be from 0 to 60. The gaze animation may require input values (the angles) from -30 to 30, in which case a shift property with value -30 may correct the GLB input time. The type property as well as the data, path, and shift properties used in this case are introduced herein.

When type is "GA_CHANNELS", the channels property contains animation properties for different parts of the avatar (e.g., each channel animates one part of the avatar). This property is similar to the one of animations in glTF and to the one of controllers in Avatar Json Interchange Format (AJIF). The properties used in these cases are like the ones of a channel of a glTF animation or to the ones of a channel of an AJIF controller.

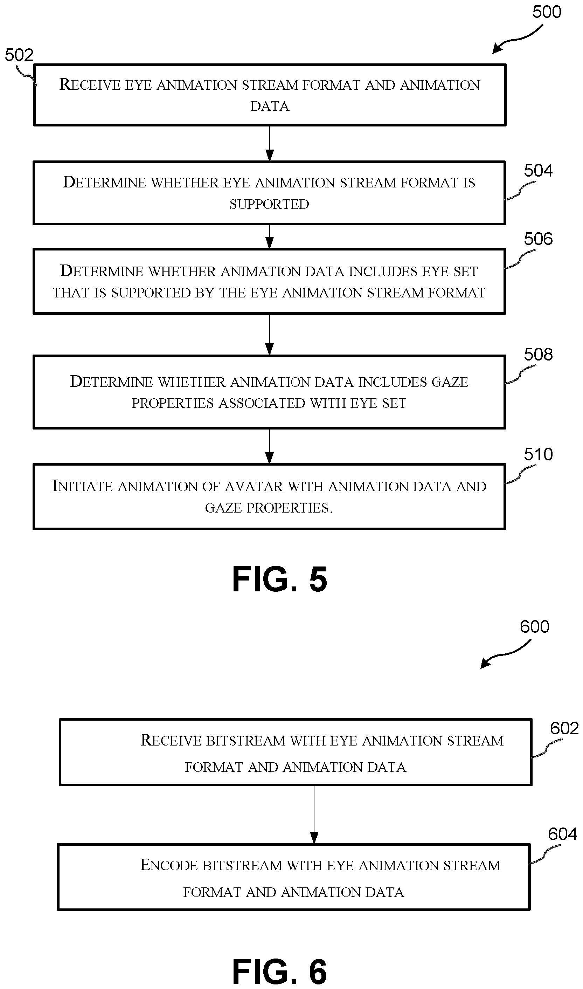

FIG. 5 is a method 500 for decoding an eye animation stream format and animation data (for example, of the ARF file 402 of FIG. 4), in accordance with some embodiments of the present disclosure. The method 500 is described with respect to the video decoder 300 of FIG. 3, although the method 500 may be performed by any suitable computing device.

The method includes, at block 502, receiving, with a decoder (for example, the decoder 300 of FIG. 3), an eye animation stream format and animation data. At block 504, the decoder 300 determines whether the eye animation stream format is supported by the decoder 300. For example, the decoder 300 determines whether the preamble container 404 of the ARF (or ARF-based) file 402 includes an eye animations property from a list of supported animations (for example, the supportedAnimation 414). Responsive to determining that the preamble container 404 of the ARF file 402 includes the eye animations property from the list of supported animations, the decoder 300 confirms whether a listing of the decoder 300 includes one or more eye animations from the eye animations property to determine that the decoder 300 supports the eye animation stream format.

At block 506, responsive to determining that the eye animation stream format is supported by the decoder 300, the decoder 300 determines whether the animation data includes an eye set property (for example, the "eyeSets" properties 424) that is supported by the eye animation stream format. For example, the decoder 300 determines whether an assets container (for example, assets 428) of the file 402 includes an eye sets property (for example, eyeSets properties 424) in one or more LOD objects 430. At block 508, the decoder 300, responsive to determining that the animation data includes the eye sets that is supported by the eye animation stream format, determines whether the animation data includes gaze properties associated with the eye set. At block 510, responsive to determining that the animation data includes the gaze properties associated with the eye set, the decoder 300 initiates an animation of an avatar with the animation data and the gaze properties.

FIG. 6 is a flowchart illustrating an example method 600 for encoding a MPEG ARF or ARF based document/file (for example, the ARF file 402), in accordance with some embodiments of the present disclosure. The method 600 is described with respect to the video encoder 200 of FIG. 2, although the method 200 may be performed by any suitable computing device.

The method 600 includes receiving (block 602) and encoding (block 604), with the encoder 200, a bitstream with an eye animation stream format and animation data, wherein the animation data includes an eye set of an avatar that is supported by the eye animation stream format and the animation data includes gaze properties of the avatar associated with the eye set.

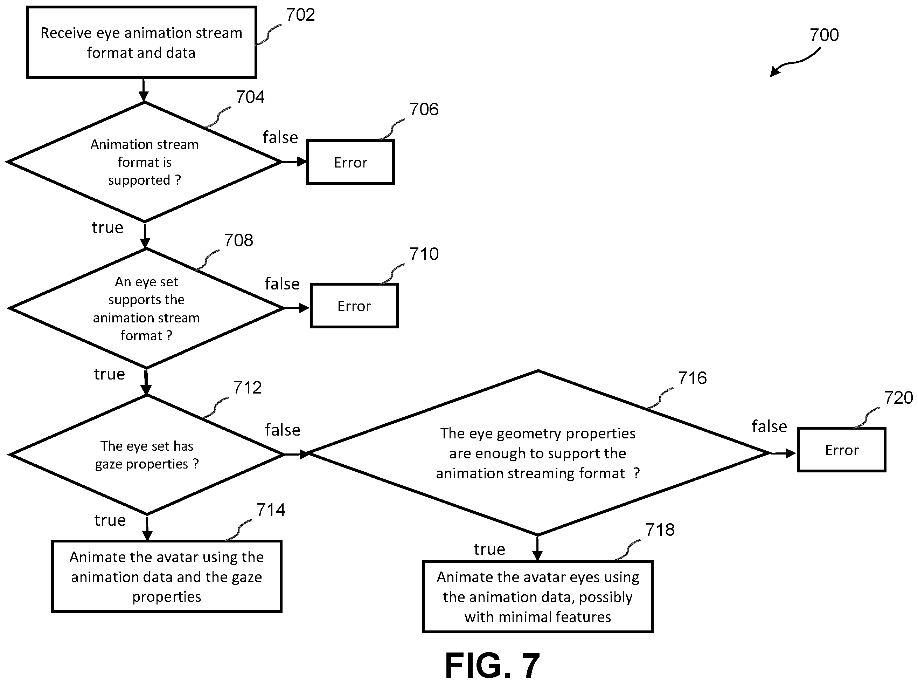

FIG. 7 is a flowchart illustrating an example (method 700) of the method 500 of FIG. 5 in accordance with some embodiments of the present disclosure. As with the method 500 described above, the method 700 is described with respect to the video decoder 300 of FIG. 3 but the method 700 may be performed by any suitable computing device.

At block 702 (corresponding to block 502 of the method 500), the decoder 300 receives eye animation data (for example, angles or look at position) respecting a specific animation stream format (for example, XR_FB_eye_tracking_social).

At block 704 (corresponding to block 504 of the method 500), the decoder 300 determines whether the decoder 300 supports the animation stream format. For example, the decoder 300 determines whether the eyesAnimation list in the supportedAnimation property of the preamble 404 contains the uniform resource name (URN) of the received animation stream format.

In instances where the decoder 300 determines that the decoder 300 does not support the animation stream format (for example, when the URN is not included), the decoder 300 exits the method 700 (block 706) (for example, generates an error message).

In instances where the decoder 300 determines that the decoder 300 does support the animation stream format, at block 708 (corresponding to block 506 of the method 500) the decoder 300 determines whether the data with the currently used in LOD 430 includes an eye set property (for example, eyeSets that supports the animation streaming format. For example, the decoder 300 determines whether the animationFormat property of an item of the eyeSets list of the components 410 root property is equal to the URN of the received animation stream format and whether the eyeSets list of the currently used LOD 430 references this particular eye set.

In instances where the decoder 300 determines that the LOD 430 does not include an eye set that supports the received animation stream format, the decoder 300 exits the method 700 (for example, generates an error message) (block 710).

In instances where the decoder 300 determines that the LOD 430 includes the eye set, the decoder 300, at block 712 (corresponding to block 508 of the method 500), the decoder 300 determines whether the eye set has gaze properties described above (corresponding to block 510 of the method 500).

In instances where the eye set is determined to have the gaze properties, the decoder animates the avatar using the animation stream data and the animation properties defined in the gaze properties at block 714, the conversion between the animation stream data (like angles or look at point) to animation/controllers parameters (like time or weights) and then, running the animation/controller is as defined in glTF or AJIF, , depending on the value of the type property in the GazeAnimation objects. When the gaze properties are present in the eye sets property (for example, eyeSets properties 424), the application may always animate the gaze of eyes the avatar (as well as other parts of the avatar, such as eyelids, eyebrows, hair, etc.).

In instances where the gaze properties are not present in the eye sets property (for example, eyeSets properties 424), the decoder 300 may attempt using the geometry properties of the eyes (block 716). In instances where there are enough geometry properties included (block 718), the decoder 300 animates the avatar of the animation stream format using based on the geometry properties. For example, for instances where the animation stream format leads to eye angles (directly or indirectly), and when each eye may be animated using a single joint (e.g., the node property of the eye refers the joint of the eye or the skin property of the eye refers a skinning of the eye), then the eyes of the avatar may be rotated by the decoder 300. For instances where the animation stream format leads to blendshape weights (directly or indirectly), and when the vertices of the avatar eye are defined (e.g. the mesh and indices properties of the eye are defined), then decoder may stretch the vertices of the eye. In instances where not enough geometric information is available, the decoder 300 may exit the method 700 (for example, generates an error message) (block 720).

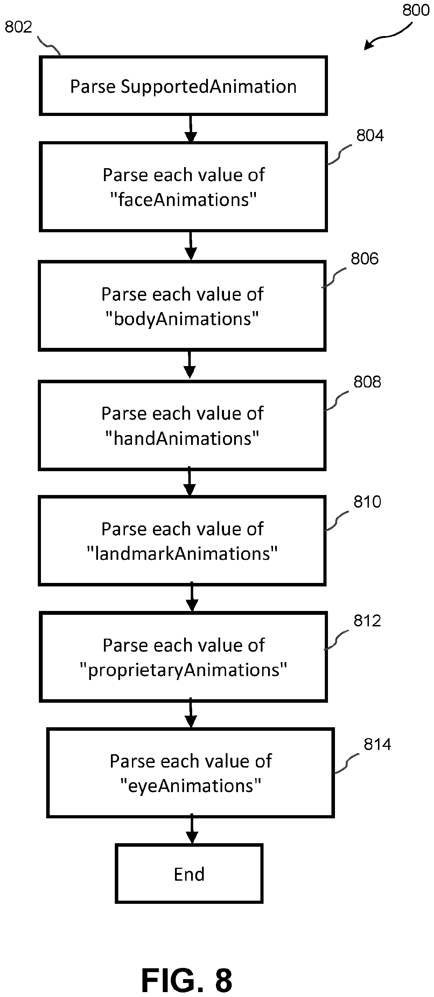

FIGS. 8 - 13 and 14A - 14B illustrate example methods 800-1400 of parsing respective properties of an encoded eye animation stream format and animation data (for example, ARF file 402 of FIG. 4) in accordance with some embodiments of the present disclosure. The example methods 800-1400 may be implemented by the decoder 300 or another suitable device according to some aspects described herein.

FIG. 8 is a flowchart illustrating the example method 800 of parsing the supportedAnimation property of the preamble 404 root property in accordance with some embodiments of the present disclosure. The supportedAnimation property is parsed (block 802), for example, in instances where the supportedAnimation property is present in the ARF file 402 (block 704 of the method 700). The method 800 includes parsing each value of the faceAnimations property (block 804), bodyAnimations property (block 806), handAnimations property (block 808), landmarkAnimations property (block 810), proprietary Animations property (block 812), and eyeAnimations property (block 814).

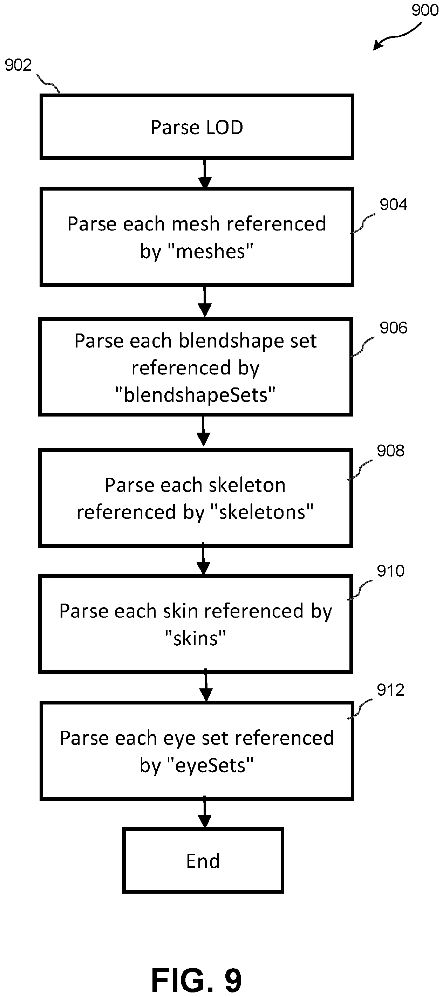

FIG. 9 is a flowchart illustrating the example method 900 of parsing the eyeSets properties of the LOD 430 property in accordance with some embodiments of the present disclosure. The LOD objects 430 are parsed (block 902), for example, in instances where the decoder 300 determines that an assets container of the ARF file 402 includes an eye sets property (for example, the eyeSets properties 424) in one or more LOD 430 objects in the ARF file 402 (block 708 of the method 700). The method 900 includes parsing each mesh of the meshes property (block 904), each blendshape of the blendshapeSets property (block 906), each skeleton of the skeletons property (block 908), each skin of the skins property (block 910), and each eye set of the eyeSets properties (block 912).

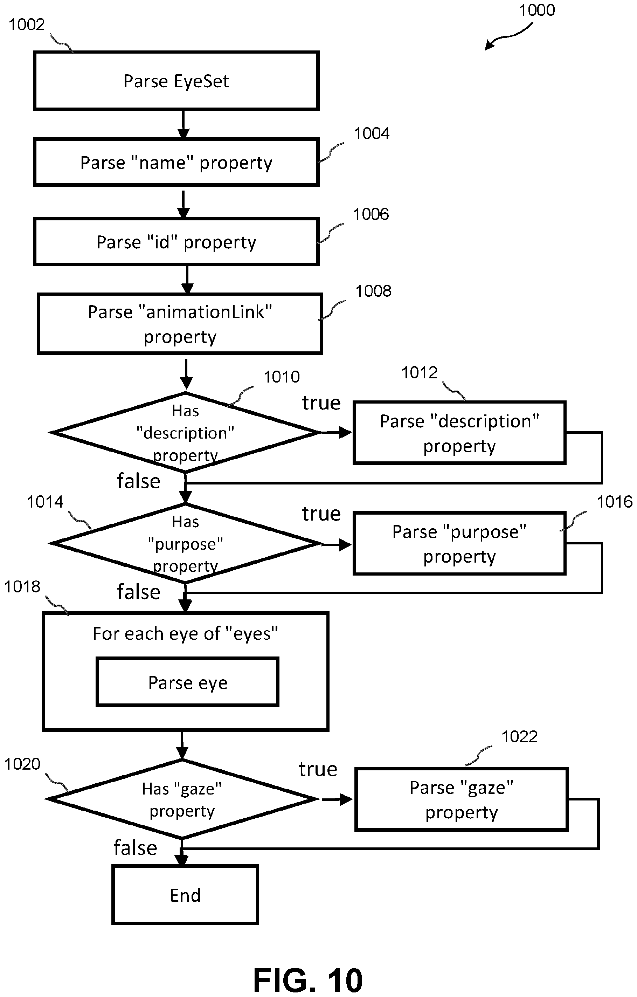

FIG. 10 is a flowchart illustrating the example method 1000 of parsing an eyeSet object in accordance with some embodiments of the present disclosure. The eyeSet object is parsed (block 1002), for example, in instances where the decoder 300 determines that an eyeSets object is included in the components container 410 of the ARF file 402 (block 708 of the method 700). The method 1000 includes parsing each of the name property (block 1004), the id property (block 1006), and the animationLink property (block 1008). The decoder 300 also parses, when present (decision block 1010), the description property (block 1012) and, when present (decision block 1014), the purpose property (block 1016). At block 1018, the decoder 300 parses the gaze properties (block 1018, and explained in more detail below). In instances where at least one of any of the name, id, animationLink, and the gaze properties are not present in the file 402, the decoder 300 exits the method 1000. The decoder 300 also parses, when present (decision block 1020), the gaze property (block 1022).

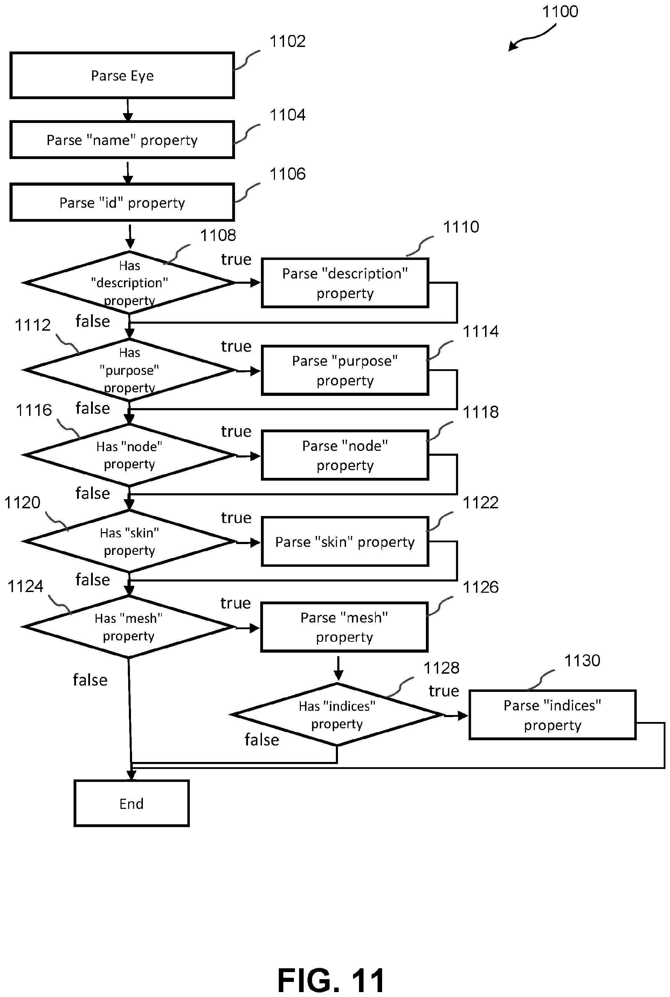

FIG. 11 is a flowchart illustrating the example method 1100 of parsing an eye object in accordance with some embodiments of the present disclosure. The eye object is parsed (block 1102), for example, in instances where the decoder 300 determines that an eye object is included in the eyeSet properties of the ARF file 402 (in some embodiments, part of block 708 of the method 700). The method 1100 includes parsing each of the name property (block 1104) and the id property (block 1106). In instances where the description property is present (decision block 1108), the decoder 300 parses the description property (block 1110). The decoder 300 also parses, when present ( decision block 1112), the purpose property (block 1114). The decoder 300 parses, when present (decision block 1116), the node property (block 1118). The decoder 300 parses, when present (decision block 1120), the skin property (block 1122). The decoder 300 parses, when present (decision block 1124), the mesh property (block 1126). In instances where the mesh property includes indices (decision block 1128), the decoder 300 parses the indices property (block 1130) (in instances where the mesh property includes indices). In instances where at least one of any of the name and id properties are not present, the decoder 300 exits the method 1100.

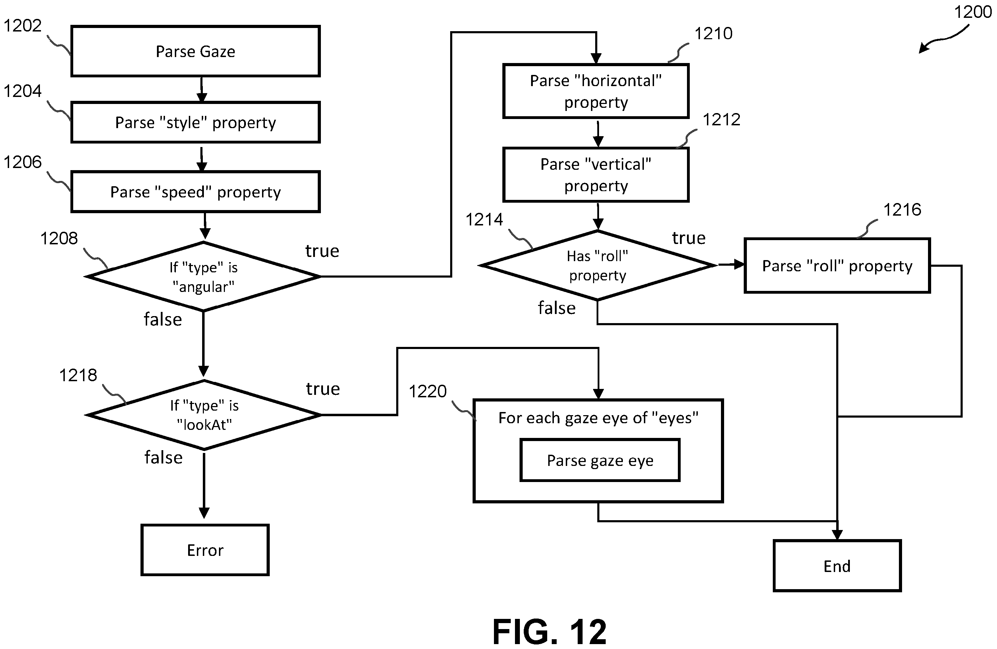

FIG. 12 is a flowchart illustrating the example method 1200 of parsing a gaze object in accordance with some embodiments of the present disclosure. The gaze object is parsed (block 1202), for example, in instances where the decoder 300 determines that a gaze object is included in the eyeSet properties of the ARF file 402 (in some embodiments, part of block 708 of the method 700). The method 1200 includes parsing each of the style property (block 1204) and the speed property (block 1206). The decoder 300, in instances where the type is determines to be "angular" (decision block 1208), parses the horizontal property (block 1210) and the vertical property (block 1212). The decoder 300, in instances where the roll property is present (decision block 1214), also parses the roll property (block 1216). In instances where the type is not "angular" (decision block 1208), the decoder 300 determines whether the type is "lookAt" (decision block 1218). In instances where the type property is "lookAt" (decision block 1218), the decoder parses each gaze eye (GazeEye) of the eyes properties (block 1220). The type is otherwise determined as invalid (decision block 1218) and the decoder ends the method 1200. In instances where at least one of the style property and the speed property are not present, the decoder 300 exits the method 1200 (for example, generates an error message).

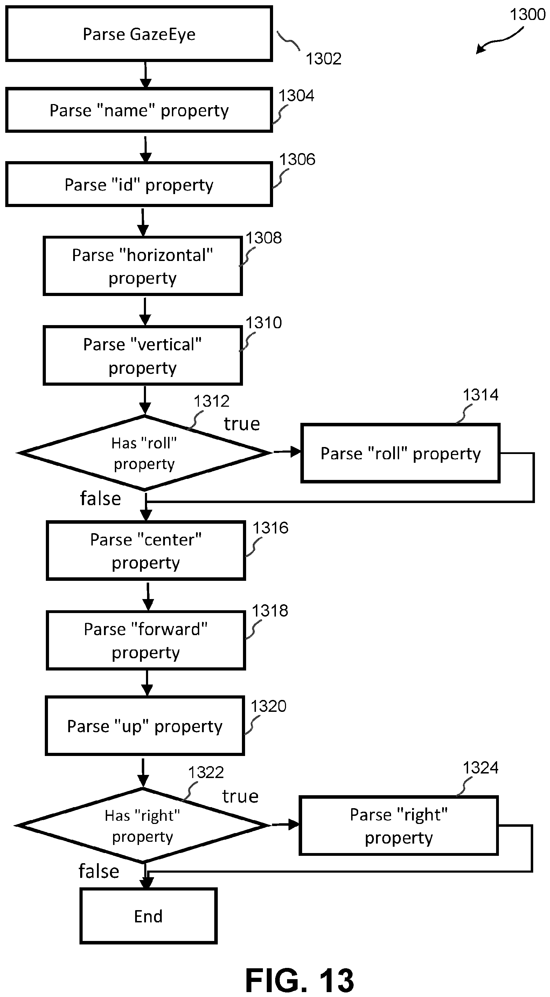

FIG. 13 is a flowchart illustrating the example method 1300 of parsing a GazeEye object in accordance with some embodiments of the present disclosure. The GazeEye object is parsed (block 1302), for example, in instances where the decoder 300 determines that a GazeEye object is included in the ARF file 402 (in some embodiments, part of block 708 of the method 700). The method 1300 includes parsing each of the name property (block 1304), the id property (block 1306), the horizontal, vertical, and roll (when present (decision block 1312)) properties (blocks 1308, 1310, and 1314 respectively), the center property (block 1316), the forward property (block 1318), and the up property (block 1320). In instances where the right property is present (decision block 1322), the decoder 300 parses the right property (block 1324). In instances where the right property is not present (decision block 1322), the decoder 300 computes the right axis using the forward and up axes (in instances where the coordinate system is right hand oriented). In instances where at least one of any of the name, id, center, forward and up properties are not present, the decoder 300 exits the method 1300.

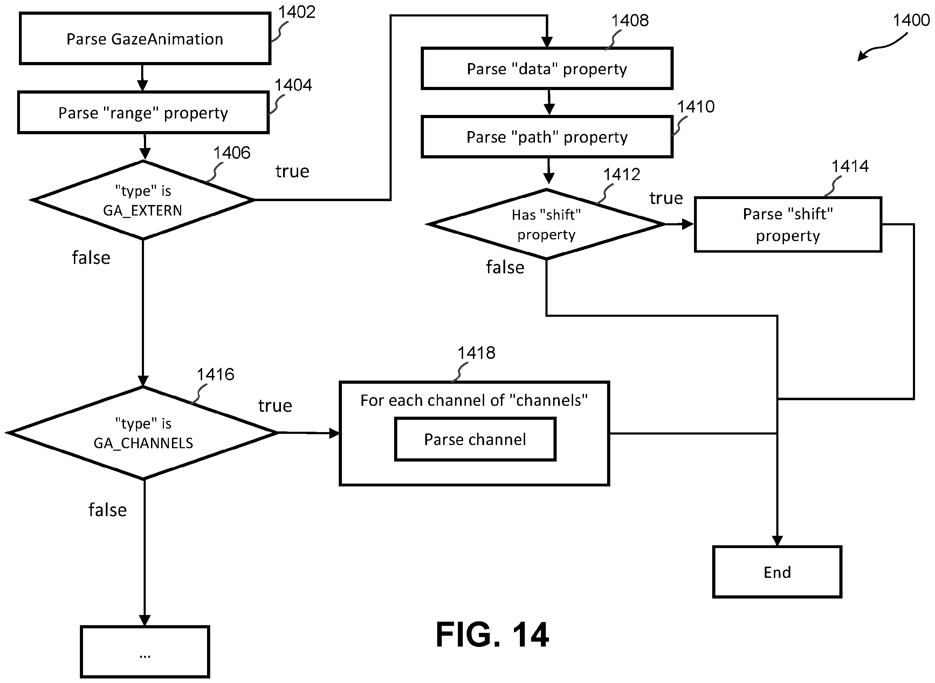

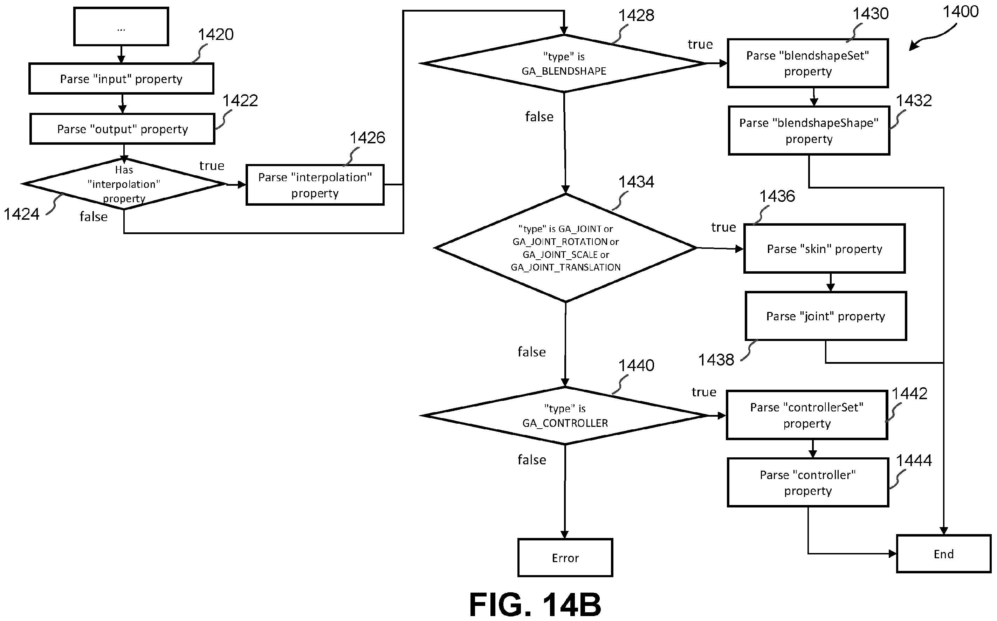

FIGS. 14A - 14B are flowcharts illustrating the example method 1400 of parsing of a GazeAnimation in accordance with some aspects. The GazeAnimation is parsed (block 1402), for example, in instances where the decoder 300 determines that a GazeAnimation object is included in the ARF file 402 (in some embodiments, part of block 708 of the method 700). The method 1400 includes parsing the range property (block 1404). In instances (decision block 1406), the data, path, and shift (when present (decision block 1412)) properties are parsed (blocks 1408, 1410, and 1414, respectively). The path property should refer an animation (or anything like an animation, like a controller) in the content referenced by the data property.

In instances where the type property is not "GA_EXTERN" (decision block 1406) and where the type is "GA_CHANNELS" (decision block 1416), each channel of channels property is parsed (1418). In instances where the type is neither "GA_EXTERN" (decision block 1406) nor "GA_CHANNELS" (decision block 1416), the decoder 300 parses the input property (block 1420), the output property (block 1422), and, when present (decision block 1424), the interpolation property (blocks 1426). In instances where the interpolation property is not present (decision block 1424), a predetermined default value may be set (for example, "LINEAR_INTERPOLATION").

In instances where the type is "GA _BLENDSHAPE" (decision block 1428), the decoder 300 parses the blendshapeSet (block 1430) and the blendshapeShape properties (block 1432). The blendshapeSet property should reference a valid blendshape set and the blendshapeShape should reference a valid blendshape within this set.

Otherwise, in instances where the type is not "GA _BLENDSHAPE" (decision block 1428) and where the type is GA_JOINT, GA_JOINT_ROTATION, GA_JOINT_SCALE or GA_JOINT_TRANSLATION (decision block 1434), the decoder 300 parses, when present, skin and joint properties (blocks 1436 and 1438, respectively). In instances where the skin property is not present, then this channel does not update the vertices of a mesh and, thus, only the joint is transformed. The skin property should reference a valid skin and the joint should reference a valid node.

In instances where the type is not "GA_BLENDSHAPE" (decision block 1428), where the type is not GA_JOINT, GA_JOINT_ROTATION, GA_JOINT_SCALE or GA_JOINT_TRANSLATION (decision block 1434), and where the type is GA_CONTROLLER (decision block 1440), the decoder 300 parses the controllerSet (when present) (block 1442) and the controller properties (block 1444). In instances where the controllerSet property is not present, then a default value may be used as the current controller set. The controllerSet property should reference a valid controller set and the controller property should reference a valid controller within this set. In instances where the range property is not present or when any value of the input, output, skin, joint, controllerSet, controller, and type properties is not valid, the decoder 300 exits the method 1400.

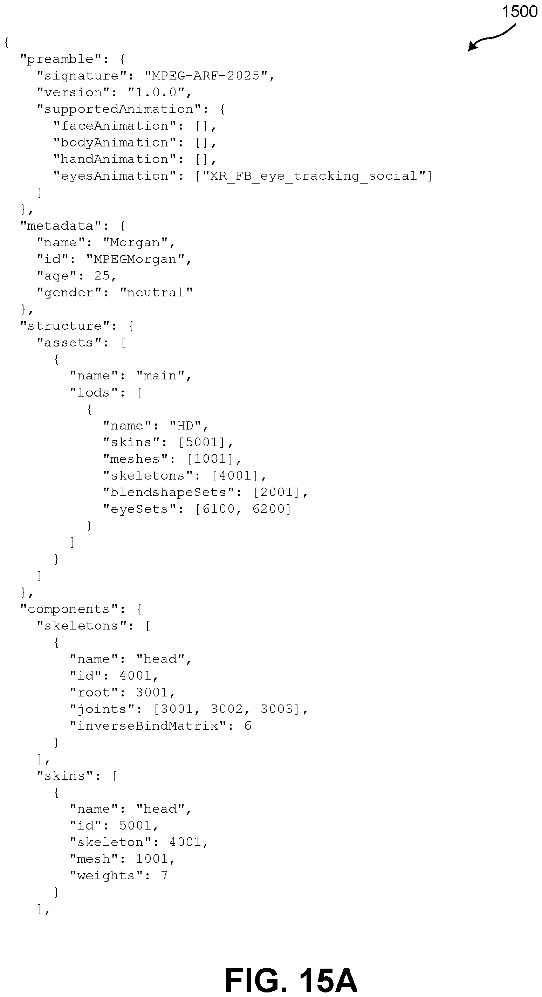

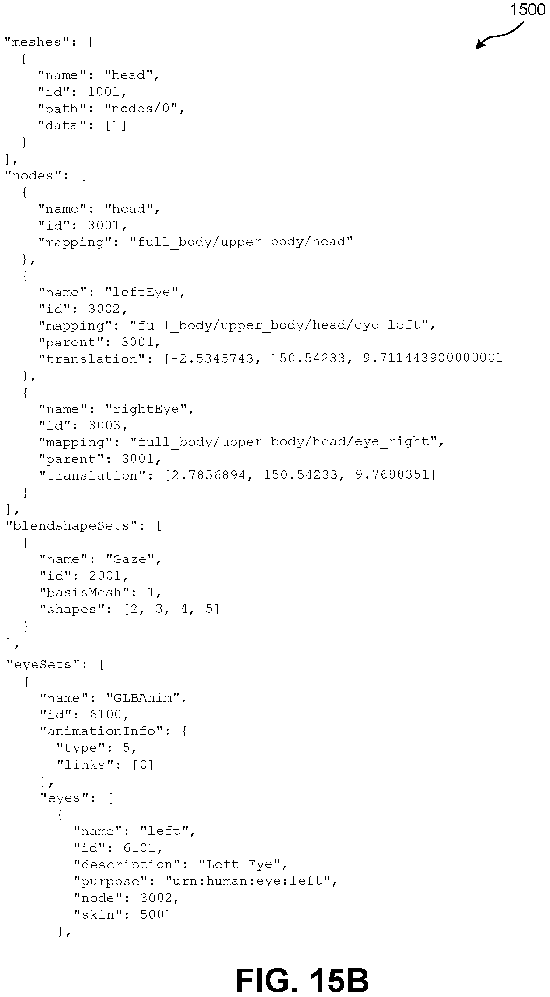

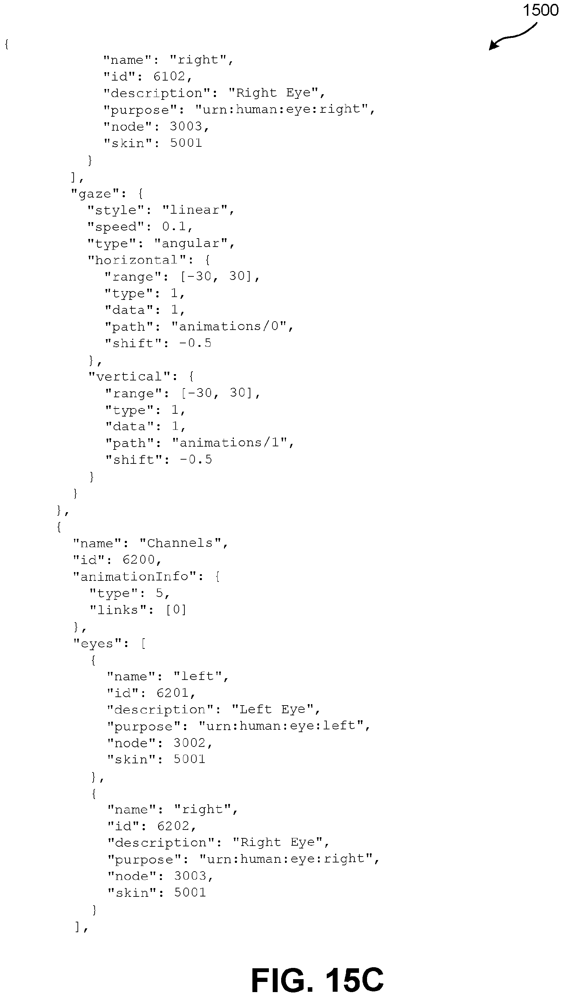

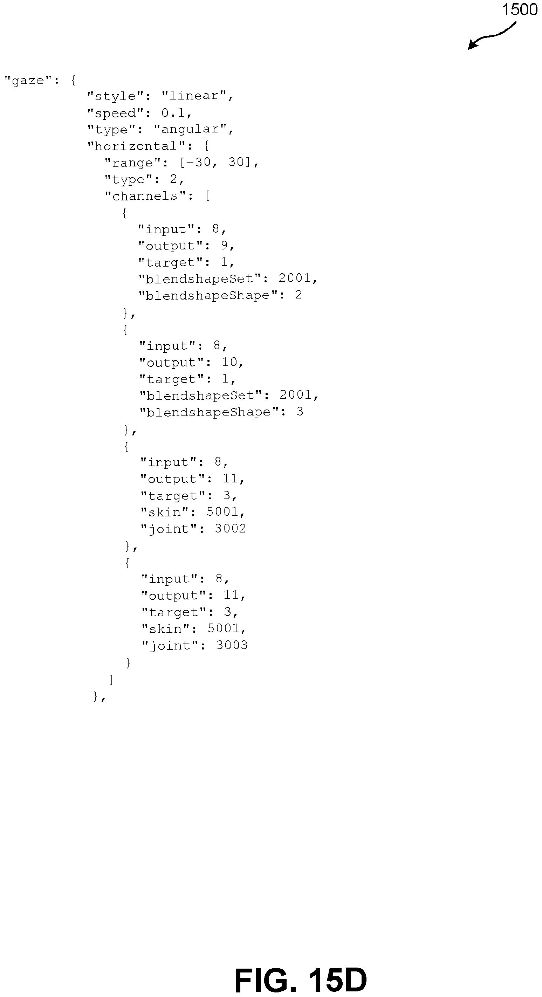

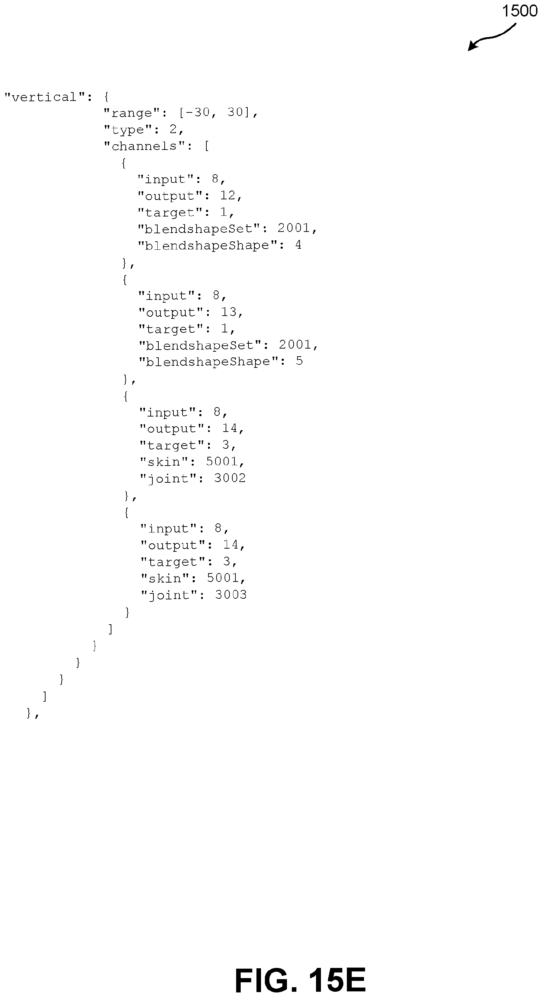

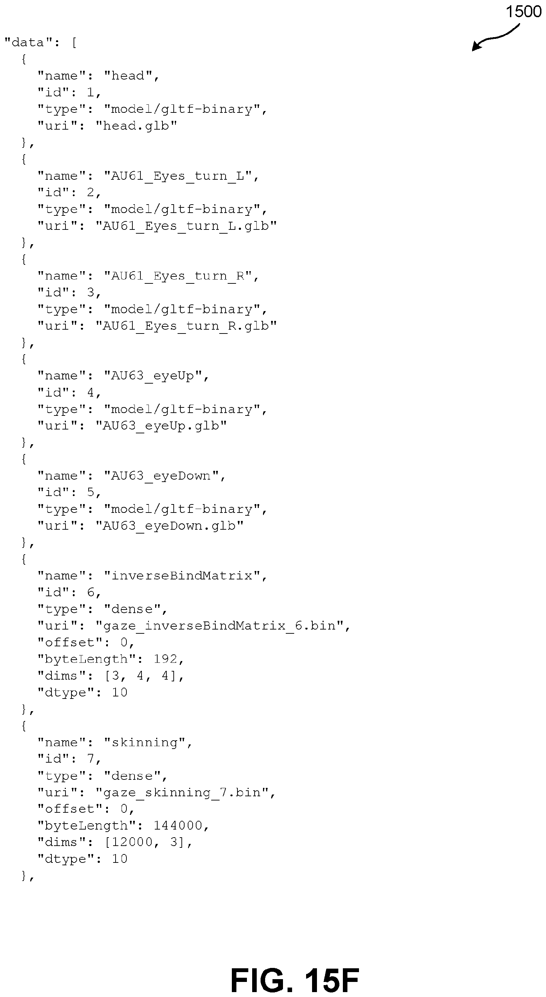

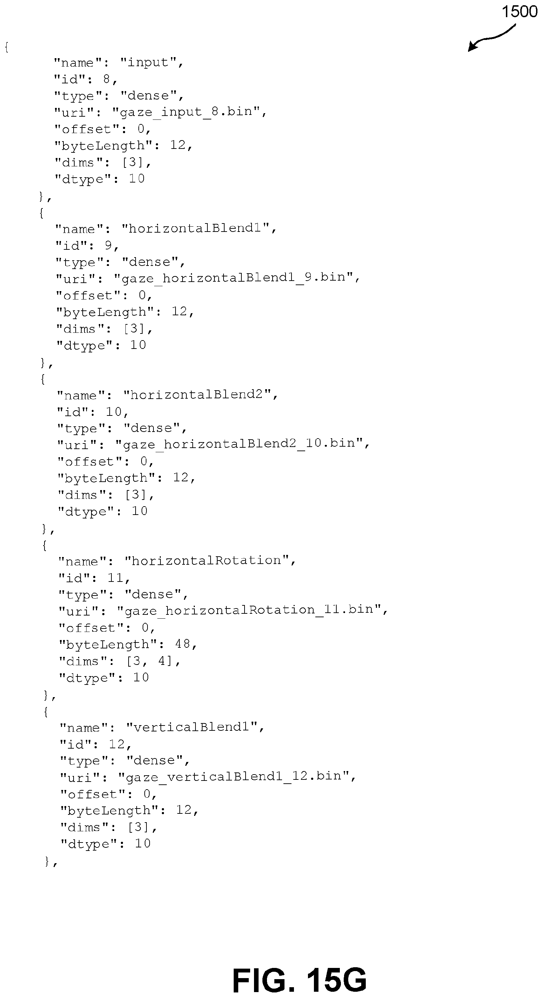

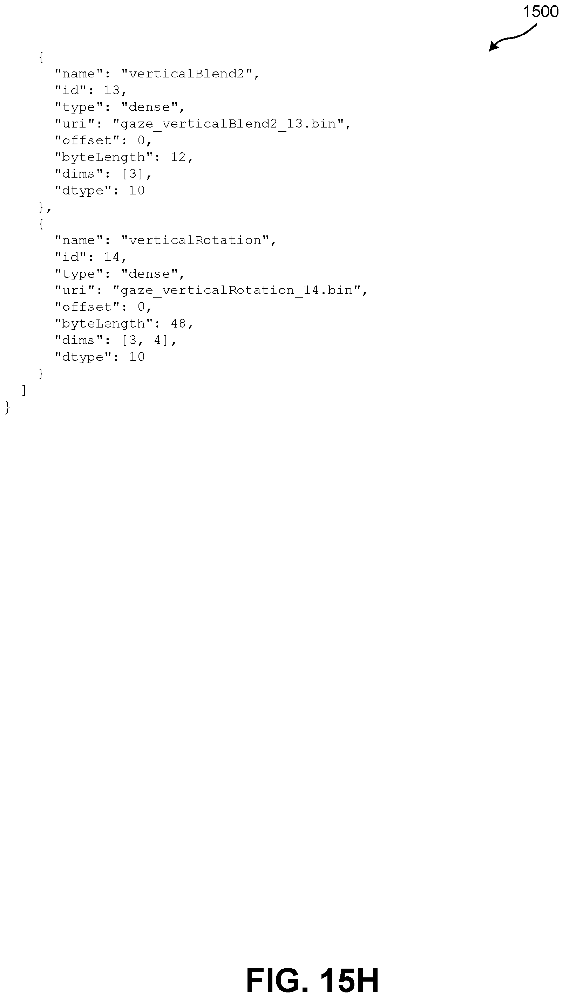

FIGS. 15A - 15H are diagram illustrating an example code 1500 of an encoded ARF file (for example, ARF file 400 of FIG. 4) in accordance with some embodiments of the present disclosure.

The preamble root property is first parsed: the eyeAnimations list of the supportedAnimation property indicates that the avatar supports eye animations based on the streaming format "XR_FB_eye_tracking_social".

The structure root property lists a single Level of Detail with a mesh, a skeleton, a skin, a blendshape set and two eye sets.

The component root property is parsed, and all the list but the eyeSets list are parsed as usual. Then, two eye sets are found in the eyeSets list.

The name of the first eye set is GLBAnim and has id 6100. The animationLink property indicates that it supports the streaming format XR_FB_eye_tracking_social (e.g. value of index 0 in the eyeAnimations list of the supportedAnimation property in the preamble root property). The eyes list defines a left and right eye. In each case, a skin and a joint are referenced, and may be used by the application to provide features like eye rotation. The gaze properties of the first eye set defines a gaze animation using a linear style, a speed of 0.1 and an angular type. The horizontal property of gaze indicates that the horizontal animation of the eyes may be found in the first animation ("type" is 1 and "node" is "animations/0") of the "head.glb" GLB file ("data" is 1 and thus refers the data item of id 1 which points to the "head.glb" file). The vertical property of gaze is similar, except that it points to the second animation in "head.glb".

The name of the second eye set is "GLBAnim" and has id 6200. The animationLink property indicates that it supports the streaming format "XR_FB_eye_tracking_social" (e.g. value of index 0 in the eyeAnimations list of the supportedAnimation property in the preamble root property). The eyes list defines a left and right eye. In each case, a skin and a joint are referenced, and may be used by the application to provide features like eye rotation. The gaze properties of the second eye set define a gaze animation using a linear style, a speed of 0.1 and an angular type. The horizontal property of gaze directly defines the channels of a controller for the horizontal animation of the eyes. There are four channels, the first two ones update blendshapes, and the two last ones update joints. The vertical property of gaze is similar, except that the channels define a vertical animation.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even when only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein may be used to modify one or more modules. For example, the intra predictors and inter predictors described with respect to FIGS. 2 and 3 may be implemented as one or more modules and modified according to the various embodiments of the present disclosure.

The following are enumerated examples of the methods, devices, and non-transitory computer-readable media that provide the gaze signaling in an ARF or ARF-based file.

Example 1. A method comprising: receiving, with a decoder, an eye animation stream format and animation data; determining, with the decoder, whether the eye animation stream format is supported by the decoder; responsive to determining that the eye animation stream format is supported by the decoder, determining, with the decoder, whether the animation data includes an eye set that is supported by the eye animation stream format; responsive to determining that the animation data includes the eye set that is supported by the eye animation stream format, determining, with the decoder, whether the animation data includes gaze properties associated with the eye set; and responsive to determining that the animation data includes the gaze properties associated with the eye set, initiating, with the decoder, an animation of an avatar with the animation data and the gaze properties.

Example 2. The method of example 1, wherein the eye animation stream format and the animation data are included in an MPEG Avatar Representation Format (ARF)-based file.

Example 3. The method of example 2, wherein determining whether the eye animation stream format is supported by the decoder further includes determining whether a preamble container of the ARF-based file includes an eye animations property from a list of supported animations; responsive to determining that the preamble container of the ARF-based file includes the eye animations property from the list of supported animations, confirming a listing of the decoder includes one or more eye animations from the eye animations property to determine that the decoder supports the eye animation stream format.

Example 4. The method of examples 2 or 3, wherein determining whether the animation data includes the eye set that is supported by the eye animation stream format further includes determining, with the decoder, whether an assets container of the ARF-based file includes an eye sets property in one or more level-of-detail (LOD) objects.

Example 5. The method of example 4, wherein the eye sets property includes all properties of eyes of the avatar.

Example 6. The method of examples 4 or 5, wherein the eye sets property includes a first link to a second eye sets property in a components container of the ARF-based file, and wherein the second eye sets property includes properties of eyes of the avatar.

Example 7. The method of example 6, wherein the properties of the eye of the avatar include an eye set name property, an eye set identifier (id) property, an animation info property, a description property, a purpose property, eyes properties, and gaze properties.

Example 8. The method of example 7, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes properties is a second array that provides geometric properties of each eye of the avatar, and wherein the gaze properties define a gaze of the avatar.

Example 9. The method of examples 7 or 8, wherein the eyes properties includes a name property, an eye identifier (id) property, a description property, a purpose property, a node property, a skin property, a mesh property, and an indices property.

Example 10. The method of example 9, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 11. The method of any of examples 7-10, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 12. The method of example 11, wherein the range property is a first number that provides minimum and maximum angles of a rotation of the animation, and wherein the type property is a first string that provides a type of gaze animation from a plurality of gaze animations.

Example 13. The method of example 12, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 14. The method of examples 12 or 13, wherein the type of the gaze animation is a channels gaze animation associated with the channels property, wherein the channels property is an array that provides a list of controller channels.

Example 15. The method of any of examples 12-14, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 16. The method of any of examples 12-15, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 17. The method of any of examples 12-16, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

Example 18. The method of any of examples 12-17, wherein responsive to determining that the animation data does not include the gaze properties associated with the eye set, determining, with the decoder, whether eye geometry properties are sufficient to support the eye animation stream format, and responsive to determining that the eye geometry properties are sufficient to support the eye animation stream format, initiating, with the decoder, a second animation of the avatar with the animation data and without the gaze properties, wherein the second animation has less features relative to the animation.

Example 19. A method comprising: encoding, with an encoder, a bitstream with an eye animation stream format and animation data; wherein the animation data includes an eye set of an avatar that is supported by the eye animation stream format, and wherein the animation data includes gaze properties of the avatar associated with the eye set.

Example 20. The method of example 19, wherein encoding, with the encoder, the bitstream with the eye animation stream format and the animation data further includes encoding the bitstream with an MPEG Avatar Representation Format (ARF)-based file including the eye animation stream format and the animation data.

Example 21. The method of example 20, wherein the ARF-based file includes a preamble container, and wherein the preamble containers includes an eye animations property from a list of supported animations.

Example 22. The method of examples 20 or 21, wherein the ARF-based file includes an assets container, and wherein the assets container includes an eye sets property in one or more level-of-detail (LOD) objects.

Example 23. The method of example 22, wherein the eye sets property includes all properties of eyes of the avatar.

Example 24. The method of examples 22 or 23, wherein the ARF-based file includes a components container, wherein the eye sets property includes a first link to a second eye sets property in the components container, and wherein the second eye sets property includes properties of eyes of the avatar.

Example 25. The method of example 24, wherein the properties of the eye of the avatar include an eye set name property, an eye set identifier (id) property, an animation info property, a description property, a purpose property, eyes properties, and gaze properties.

Example 26. The method of example 25, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes property is a second array that provides geometric properties of each eye of the avatar, and wherein the gaze properties define a gaze of the avatar.

Example 27. The method of examples 25 or 26, wherein the eyes properties includes a name property, a eye identifier (id) property, a description property, a purpose property, a node property, a skin property, a mesh property, and an indices property.

Example 28. The method of example 27, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 29. The method of any of examples 25-28, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 30. The method of example 29, wherein the range property is a first number that provides a minimum and maximum angles of a rotation of the animation, and wherein the type property is a first string that provides a type of gaze animation from a plurality of gaze animations.

Example 31. The method of example 30, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 32. The method of examples 30 or 31, wherein the type of the gaze animation is a channels gaze animation associated with the channels property, wherein the channels property is an array that provides a list of controller channels.

Example 33. The method of any of examples 30-32, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 34. The method of any of examples 30-33, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 35. The method of any of examples 30-34, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

Example 36. A decoder configured to: receive an eye animation stream format and animation data; determine whether the eye animation stream format is supported by the decoder; responsive to determining that the eye animation stream format is supported by the decoder, determine whether the animation data includes an eye set that is supported by the eye animation stream format; responsive to determining that the animation data includes the eye set that is supported by the eye animation stream format, determine whether the animation data includes gaze properties associated with the eye set; and responsive to determining that the animation data includes the gaze properties associated with the eye set, initiate an animation of an avatar with the animation data and the gaze properties.

Example 37. The decoder of example 36, wherein the eye animation stream format and the animation data are included in an MPEG Avatar Representation Format (ARF)-based file.

Example 38. The decoder of example 37, wherein determining whether the eye animation stream format is supported by the decoder further includes determining whether a preamble container of the ARF-based file includes an eye animations property from a list of supported animations; responsive to determining that the preamble container of the ARF-based file includes the eye animations property from the list of supported animations, confirming a listing of the decoder includes one or more eye animations from the eye animations property to determine that the decoder supports the eye animation stream format.

Example 39. The decoder of examples 37 or 38, wherein determining whether the animation data includes the eye set that is supported by the eye animation stream format further includes determining, with the decoder, whether an assets container of the ARF-based file includes an eye sets property in one or more level-of-detail (LOD) objects.

Example 40. The decoder of example 39, wherein the eye sets property includes all properties of eyes of the avatar.

Example 41. The decoder of examples 39 or 40, wherein the eye sets property includes a first link to a second eye sets property in a components container of the ARF-based file, and wherein the second eye sets property includes properties of eyes of the avatar.

Example 42. The decoder of example 41, wherein the properties of the eye of the avatar include an eye set name property, an eye set identifier (id) property, an animation info property, a description property, a purpose property, eyes properties, and gaze properties.

Example 43. The decoder of example 42, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes properties is a second array that provides geometric properties of each eye of the avatar, and wherein the gaze properties define a gaze of the avatar.

Example 44. The decoder of examples 42 or 43, wherein the eyes properties includes a name property, an eye identifier (id) property, a description property, a purpose property, a node property, a skin property, a mesh property, and an indices property.

Example 45. The decoder of example 44, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 46. The decoder of any of examples 42-45, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 47. The decoder of example 46, wherein the range property is a first number that provides minimum and maximum angles of a rotation of the animation, and wherein the type property is a first string that provides a type of gaze animation from a plurality of gaze animations.

Example 48. The decoder of example 47, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 49. The decoder of examples 47 or 48, wherein the type of the gaze animation is a channels gaze animation associated with the channels property, wherein the channels property is an array that provides a list of controller channels.

Example 50. The decoder of any of examples 47-49, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 51. The decoder of any of examples 47-50, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 52. The decoder of any of examples 47-51, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

Example 53. The decoder of any of examples 47-52, wherein responsive to determining that the animation data does not include the gaze properties associated with the eye set, determining, with the decoder, whether eye geometry properties are sufficient to support the eye animation stream format, and responsive to determining that the eye geometry properties are sufficient to support the eye animation stream format, initiating, with the decoder, a second animation of the avatar with the animation data and without the gaze properties, wherein the second animation has less features relative to the animation.

Example 54. A non-transitory computer-readable medium comprising instructions that, when executed by an electronic processor, cause the electronic processor to perform a method comprising: receiving an eye animation stream format and animation data; determining whether the eye animation stream format is supported by the decoder; responsive to determining that the eye animation stream format is supported by the decoder, determining whether the animation data includes an eye set that is supported by the eye animation stream format; responsive to determining that the animation data includes the eye set that is supported by the eye animation stream format, determining whether the animation data includes gaze properties associated with the eye set; and responsive to determining that the animation data includes the gaze properties associated with the eye set, initiating an animation of an avatar with the animation data and the gaze properties.

Example 55. The non-transitory computer-readable medium of example 54, wherein the eye animation stream format and the animation data are included in an MPEG Avatar Representation Format (ARF)-based file.

Example 56. The non-transitory computer-readable medium of example 55, wherein determining whether the eye animation stream format is supported by the decoder further includes determining whether a preamble container of the ARF-based file includes an eye animations property from a list of supported animations; responsive to determining that the preamble container of the ARF-based file includes the eye animations property from the list of supported animations, confirming a listing of the decoder includes one or more eye animations from the eye animations property to determine that the decoder supports the eye animation stream format.

Example 57. The non-transitory computer-readable medium of examples 55 or 56, wherein determining whether the animation data includes the eye set that is supported by the eye animation stream format further includes determining, with the decoder, whether an assets container of the ARF-based file includes an eye sets property in one or more level-of-detail (LOD) objects.

Example 58. The non-transitory computer-readable medium of example 57, wherein the eye sets property includes all properties of eyes of the avatar.

Example 59. The non-transitory computer-readable medium of examples 57 or 58, wherein the eye sets property includes a first link to a second eye sets property in a components container of the ARF-based file, and wherein the second eye sets property includes properties of eyes of the avatar.

Example 60. The non-transitory computer-readable medium of example 59, wherein the properties of the eye of the avatar include an eye set name property, an eye set identifier (id) property, an animation info property, a description property, a purpose property, eyes properties, and gaze properties.

Example 61. The non-transitory computer-readable medium of example 60, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes properties is a second array that provides geometric properties of each eye of the avatar, and wherein the gaze properties define a gaze of the avatar.

Example 62. The non-transitory computer-readable medium of examples 60 or 61, wherein the eyes properties includes a name property, an eye identifier (id) property, a description property, a purpose property, a node property, a skin property, a mesh property, and an indices property.

Example 63. The non-transitory computer-readable medium of example 62, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 64. The non-transitory computer-readable medium of any of examples 60-63, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 65. The non-transitory computer-readable medium of example 64, wherein the range property is a first number that provides minimum and maximum angles of a rotation of the animation, and wherein the type property is a first string that provides a type of gaze animation from a plurality of gaze animations.

Example 66. The non-transitory computer-readable medium of example 65, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 67. The non-transitory computer-readable medium of examples 65 or 66, wherein the type of the gaze animation is a channels gaze animation associated with the channels property, wherein the channels property is an array that provides a list of controller channels.

Example 68. The non-transitory computer-readable medium of any of examples 65-67, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 69. The non-transitory computer-readable medium of any of examples 65-68, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 70. The non-transitory computer-readable medium of any of examples 65-69, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

Example 71. The non-transitory computer-readable medium of any of examples 65-70, wherein responsive to determining that the animation data does not include the gaze properties associated with the eye set, determining, with the decoder, whether eye geometry properties are sufficient to support the eye animation stream format, and responsive to determining that the eye geometry properties are sufficient to support the eye animation stream format, initiating, with the decoder, a second animation of the avatar with the animation data and without the gaze properties, wherein the second animation has less features relative to the animation.

Example 72. An encoder configured to: encode a bitstream with an eye animation stream format and animation data; wherein the animation data includes an eye set of an avatar that is supported by the eye animation stream format, and wherein the animation data includes gaze properties of the avatar associated with the eye set.

Example 73. The encoder of example 72, wherein encoding the bitstream with the eye animation stream format and the animation data further includes encoding the bitstream with an MPEG Avatar Representation Format (ARF)-based file including the eye animation stream format and the animation data.

Example 74. The encoder of example 73, wherein the ARF-based file includes a preamble container, and wherein the preamble containers includes an eye animations property from a list of supported animations.

Example 75. The encoder of examples 73 or 74, wherein the ARF-based file includes an assets container, and wherein the assets container includes an eye sets property in one or more level-of-detail (LOD) objects.

Example 76. The encoder of example 75, wherein the eye sets property includes all properties of eyes of the avatar.

Example 77. The encoder of examples 75 or 76, wherein the ARF-based file includes a components container, wherein the eye sets property includes a first link to a second eye sets property in the components container, and wherein the second eye sets property includes properties of eyes of the avatar.

Example 78. The encoder of example 77, wherein the properties of the eye of the avatar include an eye set name property, an eye set identifier (id) property, an animation info property, a description property, a purpose property, eyes properties, and gaze properties.

Example 79. The encoder of example 78, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes property is a second array that provides geometric properties of each eye of the avatar, and wherein the gaze properties define a gaze of the avatar.

Example 80. The encoder of examples 78 or 79, wherein the eyes properties includes a name property, a eye identifier (id) property, a description property, a purpose property, a node property, a skin property, a mesh property, and an indices property.

Example 81. The encoder of example 80, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 82. The encoder of any of examples 78-81, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 83. The encoder of example 82, wherein the range property is a first number that provides a minimum and maximum angles of a rotation of the animation, and wherein the type property is a first string that provides a type of gaze animation from a plurality of gaze animations.

Example 84. The encoder of example 83, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 85. The encoder of examples 83 or 84, wherein the type of the gaze animation is a channels gaze animation associated with the channels property, wherein the channels property is an array that provides a list of controller channels.

Example 86. The encoder of any of examples 83-85, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 87. The encoder of any of examples 83-86, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 88. The encoder of any of examples 83-87, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

Example 89. A non-transitory computer-readable medium comprising instructions that, when executed by an electronic processor, cause the electronic processor to perform a method comprising: encoding a bitstream with an eye animation stream format and animation data; wherein the animation data includes an eye set of an avatar that is supported by the eye animation stream format, and wherein the animation data includes gaze properties of the avatar associated with the eye set.

Example 90. The non-transitory computer-readable medium of example 89, wherein encoding the bitstream with the eye animation stream format and the animation data further includes encoding the bitstream with an MPEG Avatar Representation Format (ARF)-based file including the eye animation stream format and the animation data.

Example 91. The non-transitory computer-readable medium of example 90, wherein the ARF-based file includes a preamble container, and wherein the preamble containers includes an eye animations property from a list of supported animations.

Example 92. The non-transitory computer-readable medium of examples 90 or 91, wherein the ARF-based file includes an assets container, and wherein the assets container includes an eye sets property in one or more level-of-detail (LOD) objects.

Example 93. The non-transitory computer-readable medium of example 92, wherein the eye sets property includes all properties of eyes of the avatar.

Example 94. The non-transitory computer-readable medium of examples 92 or 93, wherein the ARF-based file includes a components container, wherein the eye sets property includes a first link to a second eye sets property in the components container, and wherein the second eye sets property includes properties of eyes of the avatar.

Example 95. The non-transitory computer-readable medium of example 94, wherein the properties of the eye of the avatar include an eye set name property, an eye set identifier (id) property, an animation info property, a description property, a purpose property, eyes properties, and gaze properties.

Example 96. The non-transitory computer-readable medium of example 95, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes property is a second array that provides geometric properties of each eye of the avatar, and wherein the gaze properties define a gaze of the avatar.

Example 97. The non-transitory computer-readable medium of examples 95 or 96, wherein the eyes properties includes a name property, a eye identifier (id) property, a description property, a purpose property, a node property, a skin property, a mesh property, and an indices property.

Example 98. The non-transitory computer-readable medium of example 97, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

Example 99. The non-transitory computer-readable medium of any of examples 95-99, wherein the gaze properties include a gaze animation property that defines an animation of one or more eyes along a given axis, wherein the gaze animation property includes a range property, a type property, a data property, a path property, a shift property, a channels property, an input property, an interpolation property, an output property, a blendshape set property, a blendshape shape property, a skin property, a joint property, a controller set property, and a controller property.

Example 100. The non-transitory computer-readable medium of example 99, wherein the range property is a first number that provides a minimum and maximum angles of a rotation of the animation, and wherein the type property is a first string that provides a type of gaze animation from a plurality of gaze animations.

Example 101. The non-transitory computer-readable medium of example 100, wherein the type of the gaze animation is an external gaze animation associated with the data property, the path property, and the shift property, wherein the data property is a second number that identifies a data item with external content of the animation, wherein the path property is a second string that identifies an index or a path of an animation or a controller in the external content, and wherein the shift property applies to input values of the animation or the controller in the external content.

Example 102. The non-transitory computer-readable medium of examples 100 or 101, wherein the type of the gaze animation is a channels gaze animation associated with the channels property, wherein the channels property is an array that provides a list of controller channels.

Example 103. The non-transitory computer-readable medium of any of examples 100-102, wherein the type of the gaze animation is a blendshape gaze animation associated with the blendshape set property and the blendshape shape property, wherein the blendshape set property is a third number that provides an identifier of a blendshape set, and wherein the blendshape shape property is a fourth number that provides an index of a shape in the blendshape set.

Example 104. The non-transitory computer-readable medium of any of examples 100-103, wherein the type of the gaze animation is one of a joint gaze animation, a joint rotation gaze animation, a joint scale gaze animation, or a joint translation gaze animation associated with the skin property and the joint property, wherein the skin property is a third number that provides an identifier of a skin, and wherein the joint property is a fourth number that provides an identifier of a joint.

Example 105. The non-transitory computer-readable medium of any of examples 100-104, wherein the type of the gaze animation is a controller gaze animation associated with the controller set property and the controller property, wherein the controller set property is a second integer that provides an identifier of a controller set, and wherein the controller property is a third integer that provides an identifier of a controller in the controller set.

The various embodiments described herein provide at least the following features, devices or aspects, alone or on any combination, across various claim categories and types:
i. Encoding, into coded video data, syntax elements that may enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that may be transmitted or stored. Such information may be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" may also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
receiving, with a decoder, an eye animation stream format and animation data;
determining, with the decoder, whether the eye animation stream format is supported by the decoder;
responsive to determining that the eye animation stream format is supported by the decoder, determining, with the decoder, whether the animation data includes an eye set that is supported by the eye animation stream format;
responsive to determining that the animation data includes the eye set that is supported by the eye animation stream format, determining, with the decoder, whether the animation data includes gaze properties associated with the eye set; and
responsive to determining that the animation data includes the gaze properties associated with the eye set, initiating, with the decoder, an animation of an avatar with the animation data and the gaze properties.

2. The method of claim 1, wherein the eye animation stream format and the animation data are included in an MPEG Avatar Representation Format (ARF)-based file.

3. The method of claim 2, wherein determining whether the eye animation stream format is supported by the decoder further includes
determining whether a preamble container of the ARF-based file includes an eye animations property from a list of supported animations;
responsive to determining that the preamble container of the ARF-based file includes the eye animations property from the list of supported animations, confirming a listing of the decoder includes one or more eye animations from the eye animations property to determine that the decoder supports the eye animation stream format.

4. The method of claim 2, wherein determining whether the animation data includes the eye set that is supported by the eye animation stream format further includes determining, with the decoder, whether an assets container of the ARF-based file includes an eye sets property in one or more level-of-detail (LOD) objects.

5. The method of claim 4, wherein the eye sets property includes a first link to a second eye sets property in a components container of the ARF-based file, and wherein the second eye sets property includes properties of eyes of the avatar.

6. The method of claim 5, wherein the properties of the eye of the avatar include an eye set name property, an eye set identifier (id) property, an animation info property, a description property, a purpose property, eyes properties, and gaze properties.

7. The method of claim 6, wherein the eye set name property is a first string that provides a name of an eye set, wherein the eye set id property is an integer that provides a unique identifier of the eye set, wherein the animation info property is a first array that provides a link to the supported animations and tracking frameworks for the eye set, wherein the description property is a second string that provides a description and a usage of the eye set, wherein the purpose property is a third string that provides a purpose of the eye set, wherein the eyes properties is a second array that provides geometric properties of each eye of the avatar, and wherein the gaze properties define a gaze of the avatar.

8. The method of claim 6, wherein the eyes properties includes a name property, an eye identifier (id) property, a description property, a purpose property, a node property, a skin property, a mesh property, and an indices property.

9. The method of claim 8, wherein the name property is a first string that provides a name of an eye of the avatar, wherein the eye id property is an integer that provides a unique identifier of the eye, wherein the description property is a second string that provides a description and a usage of the eye, wherein the purpose property is a third string that provides a purpose of the eye, wherein the node property is a first number that provides a joint for the eye, wherein the skin property is a second number that references a skinning to be used to animate the eye, wherein the mesh property is a third number that references a mesh that includes the eye, and wherein the indices property is a fourth number that references a data item with a list of vertex indices of the eye.

10. A decoder including an electronic processor configured to perform a method according to any of the claims 1 - 9.

11. A non-transitory computer-readable medium comprising instructions that, when executed by an electronic processor, cause the electronic processor to perform a method according to any of one of the claims 1 - 9.

12. A method comprising:
encoding, with an encoder, a bitstream with an eye animation stream format and animation data;
wherein the animation data includes an eye set of an avatar that is supported by the eye animation stream format, and
wherein the animation data includes gaze properties of the avatar associated with the eye set.

13. The method of claim 10, wherein encoding the bitstream with the eye animation stream format and the animation data further includes encoding the bitstream with an MPEG Avatar Representation Format (ARF)-based file including the eye animation stream format and the animation data.

14. A device including an electronic processor configured to perform a method according to any of the claims 10 or 11.

15. A non-transitory computer-readable medium comprising instructions that, when executed by an electronic processor, cause the electronic processor to perform a method according to any of one of the claims 10 or 11.
